# EUROPÄISCHE PATENTSCHRIFT

(11) **EP 1 486 399 B1**
(45) Veröffentlichungstag und Bekanntmachung des Hinweises auf die Patenterteilung: **30.04.2008**
(21) Anmeldenummer: 04012837.3
(22) Anmeldetag: 29.05.2004
(51) Int. Cl.: B62D 7/14, B60G 17/015

(54) **Verfahren und Lenksystem für die Mehrachslenkung eines Kraftfahrzeuges**
Method and steering system for a multi-axle steering of a vehicle
Procedure et système de direction comprenant une direction multi-essieux de véhicule

(30) Priorität: 12.06.2003 DE 10326384
(43) Veröffentlichungstag der Anmeldung: 15.12.2004
(73) Patentinhaber: ZF Lenksysteme GmbH, 73527 Schwäbisch Gmünd (DE)
(72) Erfinder: Braun, Andreas, 73529 Schwäbisch Gmünd (DE); Stocker, Jürgen, 73479 Ellwangen (DE); Löffler, Hans-Peter, 73577 Ruppertshofen (DE)

(56) Entgegenhaltungen:
- EP-A- 0 799 755
- WO-A-93/02906
- WO-A-95/29087
- DE-A- 19 635 462
- DE-U- 29 608 229

## Beschreibung

Die Erfindung betrifft ein Verfahren sowie ein Lenksystem für die Mehrachslenkung eines Kraftfahrzeuges, insbesondere eines Nutzkraftwagens, nach dem Oberbegriff des Anspruchs 1.

Die Mehrachslenkung von Kraftfahrzeugen, insbesondere von Nutzkraftwagen, ist an sich schon länger bekannt, so etwa aus der gattungsgemäßen WO 95/29087. Das Prinzip dieser Lenkungen umfasst eine aktive Vorderachslenkung mittels einer geregelten hydraulischen Lenkunterstützung und eine nachgeführte hydraulische Hinterachslenkung. In dem aus der WO 05/29087 bekannten System erfolgt die Nachführung beispielsweise durch Ankopplung eines sogenannten Nehmerzylinders der Hinterachshydraulik an einen sogenannten. Geberzylinder der Vorderachshydraulik. Es ist aber auch bekannt, die Hinterachslenkung durch eine elektronische oder sogar durch eine rein software-bezogene Kopplung mit der Vorderachslenkung zu verbinden. Dazu werden z.B. in Form einer Master-Slave-Schaltung elektronische Regelungen für die Vorder- und Hinterachse vorgesehen, von denen die Vorderachsregelung als bestimmende Regelung auch das Verhalten der Hinterachsregelung prägt. Es kann auch eine einzige elektronische, vorzugsweise prozessorgesteuerte, Schaltung vorgesehen werden, die beide Aufgaben, d.h. die Regelung der Vorder- und Hinterachslenkung, ausführt. Das wird z.B. dadurch erreicht, dass Software-Parameter, die im Rahmen der Vorderachslenkung auftreten, an die Programmteile für die Hinterachslenkung übergeben werden.

Unabhängig von der verwendeten Technik müssen bei allen Mehrachslenksystemen die Vorderachslenkung und Hinterachslenkung sehr genau aufeinander abgestimmt werden, um möglichst optimale Lenkeigenschaften des Fahrzeuges sowie hohe Fahrsicherheit und -komfort zu erreichen.

Die DE 296 08 229 U1 beschreibt ein Verfahren und ein Lenksystem für die Mehrachslenkung eines Nutzkraftwagens, bei dem der Austellwinkel der Hintertrachse nicht nur in Abhängigkeit vom Lenkeinschlagwinkel der Vorderräder eingestellt wird, sondern auch in Abhängigkeit von der Fahrgeschwindigkeit des Fahrzeuges. Dabei wird mittels einer elektronischen Steuereinheit die Auslenkung der Hinterachse proportional zum Lenkeinschlagwinkel der Vorderräder eingestellt, sofern die Fahrgeschwindigkeit eine Geschwindigkeitsschwelle von beispielsweise 20 km/h nicht überschreitet. In einem mittleren Geschwindigkeitsbereich, der z.B. zwischen 20 und 40 km/h liegt, wird der Ausstellwinkel der Hinterachse umgekehrt proportional zur Geschwindigkeitszunahme reduziert, um dann bei Überschreiten einer oberen Geschwindigkeitsgrenze von z.B. 40 km/h auf Null zu gehen, so dass die Hinterachse die Normalstellung für Geradeausfahrt einnimmt.

Üblicherweise werden derartige Lenksysteme vor Auslieferung an den Kunden kalibriert, d.h. zur Inbetriebnahme des Fahrzeuges erfolgt eine Grundeinstellung (Erst-Kalibrierung) des Lenksystems, bei der die Komponenten, wie z.B. Lenkwinkelsensoren, elektronische und mechanische Stellglieder usw., eingemessen und optimal eingestellt werden. Insbesondere wird auch die Normalstellung der Räder für die Geradeausfahrt optimal eingestellt. Es ist jedoch das Problem bekannt, dass mit zunehmender Betriebsdauer die Systemkomponenten verschiedenen Einflüssen, insbesondere mechanischer Beanspruchung, Materialalterung sowie Wärme und Feuchtigkeit, ausgesetzt sind und somit die Grundeinstellung angepasst werden muss, d.h. dass die Systemkomponentnen rekalibriert (nachkalibriert) werden müssen.

Aus der DE 697 14 806 T2 ist ein Verfahren zum Ermitteln der Stellung der Lenkung für die Vorderachse bekannt, bei dem eine Mittelstellungsschätzung durchgeführt wird, um die Lenkung für die Geradeausfahrt nachzukalibrieren. Die Erfassung der Messdaten und das Anpassen der Grundeinstellung wird während des Betriebs durchgeführt, sofern das Fahrzeug sich im Zustand der Geradeausfahrt befindet. Um dies festzustellen, wird u.a. geprüft, ob das Fahrgeschwindigkeit oberhalb eines Minimums von 7 km/h liegt und ob über einen gewissen Zeitraum hinweg der Lenkradeinschlagwinkel sich in einem gewissen um die Mittenstellung definierten Toleranzbereich befunden hat. Eine Rekalibrierung für Mehrachslenkungen, insbesondere für die Hinterachslenkung, wird dort jedoch nicht beschrieben.

Aufgabe der Erfindung ist es, ein Verfahren und ein danach arbeitendes Lenksystem für die Mehrachslenkung eines Kraftfahrzeuges anzugeben, bei dem während des Fahrbetriebs die Systemkomponenten zumindest für die Geradeausfahrt rekalibriert werden.

Die Aufgabe wird gelöst durch ein Verfahren mit den Merkmalen des Anspruchs 1 sowie durch ein Lenksystem mit den Merkmalen des nebengeordneten Anspruchs.

Demnach wird ein Verfahren vorgeschlagen, bei dem während des Betriebs des Kraftfahrzeuges die Grundeinstellung (Erst-Kalibrierung) der Hinterachse rekalibriert wird, wobei zunächst geprüft wird, ob der erste an der Vorderachse erfasste Lenkwinkel innerhalb eines vorgebbaren Toleranzbereichs liegt, der die Neutralstellung der Vorderachse für die Geradeausfahrt umfasst. Dann wird geprüft , ob die Fahrgeschwindigkeit des Kraftfahrzeuges oberhalb einer vorgebbaren Mindestgeschwindigkeit liegt. Sind beide geprüften Bedingungen erfüllt, so wird die Neutralstellung der Hinterachse für die Geradeausfahrt des Kraftfahrzeuges rekalibriert, indem der Grundeinstellwert, der die Neutralstellung der Hinterachse für Geradeausfahrt definiert, mit einem Korrekturwert beaufschlagt wird.

Das ebenfalls vorgeschlagene Lenksystem umfasst eine Recheneinheit, die zur elektronischen Steuerung der Mehrachslenkung mit einem ersten Lenkwinkelsensor ausgestattet ist, der mit der Recheneinheit verbunden ist und der einen ersten Lenkwinkel an der Vorderachse des Kraftfahrzeuges erfasst. Außerdem ist ein zweiter Lenkwinkelsensor vorgesehen, der mit der Recheneinheit verbunden ist und der einen einen zweiten Lenkwinkel an der zu lenkenden Hinterachse erfasst. die Recheneinheit berechnet eine Änderung dieses zweiten Lenkwinkels zumindest in Abhängigkeit von dem ersten Lenkwinkel. Zur Inbetriebnahme des Kraftfahrzeuges ist die Grundeinstellung der Hinterachse für die Geradeausfahrt des Kraftfahrzeuges kalibriert mittels eines Grundeinstellwerts, der die Neutralstellung der Hinterachse für die Geradeausfahrt definiert. Die Recheneinheit rekalibriert während des Betriebs des Kraftfahrzeuges diese Grundeinstellung der Hinterachse, wobei die Recheneinheit prüft, ob der erste an der Vorderachse erfasste Lenkwinkel innerhalb eines vorgebbaren Toleranzbereichs liegt, der die Neutralstellung der Vorderachse für die Geradeausfahrt umfasst Die Recheneinheit prüft anhand der von einem Geschwindigkeitssensor erfassten Fahrgeschwindigkeit des Kraftfahrzeuges, ob die Fahrgeschwindigkeit oberhalb einer vorgebbaren Mindestgeschwindigkeit liegt, wobei die Recheneinheit, sofern die beiden geprüften Bedingungen erfüllt sind, die Einstellung der Hinterachse für die Geradeausfahrt des Kraftfahrzeuges rekalibriert, indem die Recheneinheit den Grundeinstellwert, der die Neutralstellung der Hinterachse für Geradeausfahrt definiert, mit einem Korrekturwert beaufschlagt.

Mit dem erfindungsgemäßen Verfahren und Lenksystem wird eine fortlaufende Rekalibrieung der Hinterachsen-Grundeinstellung auf ein optimales Geradeausfahrverhalten hin durchgeführt, wobei dies nur dann geschieht, wenn das Fahrzeug sich schneller als eine Mindestgeschwindigkeit bewegt und die Lenkausschläge an der Vorderachse möglichst gering sind, so dass davon auszugehen ist, das sich das Fahrzeug in einer Geradeausfahrt-Situation befindet, die eine Rekalibrierung erlaubt Die Erfindung geht von der Erkenntnis aus, dass eine fortlaufende Rekalibrierung der Hinterachse zuverlässig und effizient durchgeführt werden kann, wenn das Fahrzeug sich in einer Situation befindet, die hinreichend gut einer Geradeausfahrt gleichkommt. Es hat sich herausgestellt, dass dazu zumindest geprüft werden muss, dass der Vorderachs-Lenkwinkel annähernd Null ist, d.h. einer Neutralstellung gleichkommt und das Fahrzeug sich mit einer ausreichend hohem Fahrgeschwindigkeit fortbewegt, die z.B. 6 km/h und mehr betragen sollte.

Vorteilhafte Ausgestaltungen der Erfindung ergeben sich aus den Unteransprüchen.

Danach werden mittels einer Recheneinheit auf der Grundlage des erfassten ersten Lenkwinkels und des erfassten zweiten Lenkwinkels fortlaufend Stellwerte für die Neutralstellung der Hinterachse berechnet, wobei diese Stellwerte für die Berechnung eines Zeitmittelwertes herangezogen werden, der einem mittleren Stellwert für die Neutralstellung der Hinterachse entspricht. In diesem Zusammenhang ist es von Vorteil, wenn die Stellwerte für die Berechnung des mittleren Stellwert nur dann herangezogen werden, wenn die geprüften Bedingungen erfüllt werden, d.h. wenn über einen Beobachtungszeitraum hin der Lenkausschlag an der Vorderachse nahezu Null (Neutralstellung) beträgt und wenn die Fahrgeschwindigkeit nicht zu gering ist.

Es ist vorteilhaft, wenn eine vorgebbare Anzahl an Stellwerten, die innerhalb eines Beobachtungszeitraumes auftreten, zu einer Summe aufsummiert werden und dass für einen Satz von zumindest zwei zeitlich aufeinander folgenden Beobachtungszeiträumen die entsprechenden Summen gebildet werden und aus ihnen der mittlere Stellwert berechnet wird. In diesem Zusammenhang sollte vorteilhafterweise die Berechnung für den mittleren Stellwert zyklisch fortlaufend wiederholt werden, wobei in jedem neuen Zyklus der jüngste Beobachtungszeitraum zu dem Satz der Beobachtungszeiträume hinzu genommen und der älteste Beobachtungsraum aus dem Satz heraus genommen werden. Dadurch wird eine fließende Mittelwertbildung durchgeführt, bei der sowohl die aktuellen Stellwerte als auch die Stellwerte aus den letzten, z.B. 3 letzten Beobachtungszeiträumen, mit berücksichtigt werden.

Auch ist es von Vorteil, wenn geprüft wird, ob der berechnete mittlere Stellwert einen vorgebbaren unteren Grenzwert unterschreitet oder einen vorgebbaren oberen Grenzwert überschreitet. Dabei sollte zusätzlich berücksichtigt werden, den Korrekturwert nur dann neu zu berechnen, wenn der berechnete mittlere Stellwert entweder den unteren Grenzwert unterschreitet oder den oberen Grenzwert überschreitet. Dadurch wird ein bestimmter Toleranzbereich für die Neutralstellung definiert, in dem der berechnete Stellwert liegen darf, ohne dass rekalibriert wird.

Von Vorteil ist es auch, wenn geprüft wird, ob der zuletzt berechnete Korrekturwert weder einen vorgebbaren unteren Grenzkorrekturwert unterschreitet noch einen vorgebbaren oberen Grenzkorrekturwert überschreitet. Hierbei sollte zusätzlich beachtet werden, dass der Korrekturwert nur dann neu berechnet wird, wenn der zuletzt berechnete der Korrekturwert weder den unteren Grenzkorrekturwert unterschreitet noch den oberen Grenzkorrekturwert überschreitet. Durch diese Maßnahmen wird der Korrekturwert, der z.B. ein sogenannter Offset-Wert sein kann, auf einen Bereich begrenzt, so dass keine zu großen Korrekturen auf einmal durchgeführt werden, die das Regelverhalten des Lenksystems negativ beeinflusst werden könnten.

Nachfolgend wird die Erfindung näher beschrieben anhand eines Ausführungsbeispiels und unter Zuhilfenahme der beiliegenden Zeichnungen:
- Fig. 1: zeigt den schematischen Aufbau eines erfindungsgemäßen Lenksystems,
- Fig. 2: zeigt ein Ablaufdiagramm für eines erfindungsgemäßen Verfahrens,
- Fig. 3: zeigt ein Schema zur Bestimmung des mittleren Stellwertes

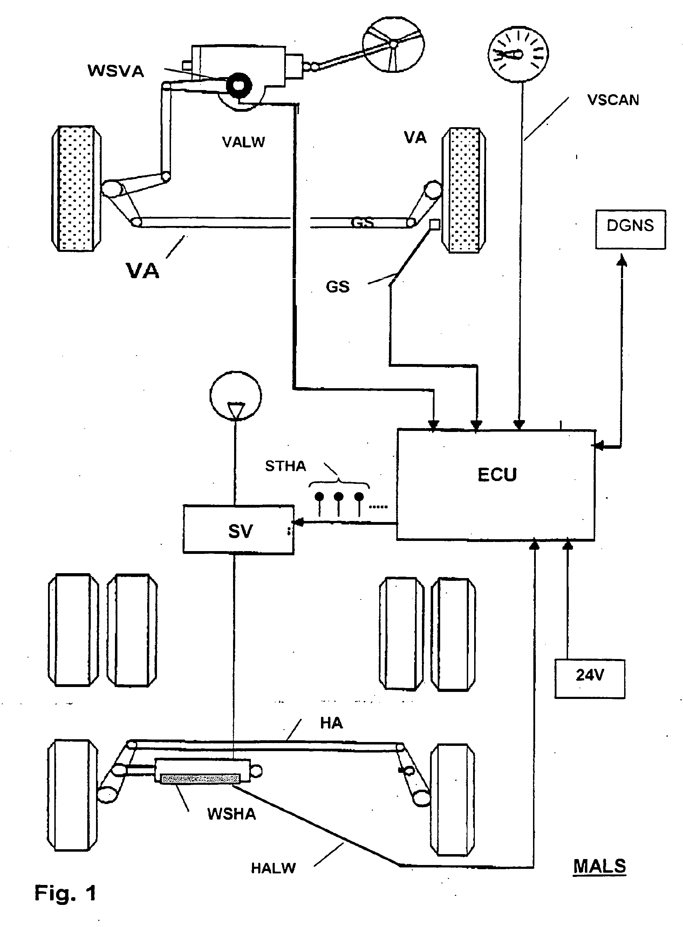

In der Figur 1 ist schematisch der Aufbau eines erfindungsgemäßen Lenksystems für ein mehrachsiges Fahrzeug dargestellt. Das Fahrzeug verfügt über eine gelenkte Vorderachse VA und über zwei Hinterachsen, von denen eine Hinterachse starr ist und die andere Hinterachse HA gelenkt wird. Die gelenkte Hinterachse kann sowohl, vor als auch hinter der starren Achse angebracht sein. Die Lenkung der beiden lenkbaren Achsen, also der Vorderachse VA sowie auch der Hinterachse HA , erfolgt über ein hydraulisches Servolenksystem, das eine elektronische Recheneinheit ECU umfasst. Die Funktionsweise solcher Lenksysteme ist an sich bekannt.

Daher bezieht sich der Gegenstand der Erfindung weniger auf die Lenkfunktion als vielmehr auf die Rekalibrierung des gesamten Lenksystems. Das dargestellte Lenksystem MALS, hat neben der Recheneinheit ECU, eine Vielzahl damit verbundener Sensoren, so etwa einen ersten Sensor WSVA zur Erfassung des Lenkwinkels VALW an der Vorderachse VA und einen zweiten Sensor WSHA zur Erfassung des Lenkwinkels HALW an der Hinterachse HA. Auch wird der Recheneinheit ECU die,aktuelle Fahrgeschwindigkeit des Fahrzeuges VSCAN über einen Datenbus, vorzugsweise über einen sogenannten CAN-Bus, übermittelt. Die Recheneinheit ECU berechnet zumindest aufgrund dieser von den Sensoren gemessenen Eingangswerte Stellwerte, die.zur Ansteuerung des Servoventils SV für die Auslenkung der Hinterachse HA benötigt werden.

Im Zustand der Fahrzeugauslieferung, wird üblicherweise vom Hersteller des Fahrzeugs das Lenksystem auf eine Grundeinstellung hin kalibriert. Damit wird das die Lenksystem, dessen Funktion im wesentlichen durch die Recheneinheit ECU gesteuert wird, optimal eingestellt ist. Dies ist insbesondere wichtig für den Zustand der Geradeausfahrt, d.h. wenn die Fahrzeuglenkung sich in ihrer Neutralstellung befindet. In diesem Zustand sollen sowohl der erste Lenkwinkel VALW an der Vorderachse VA als auch der zweite Lenkwinkel HALW an der Hinterachse HA optimal auf Geradeausfahrt eingestellt sein. Das gilt sowohl für die Vorderachse VA als auch für die Hinterachse HA.

In Bezug auf die Hinterachse bedeutet das: Sind die Komponenten des Lenksystems, insbesondere die Recheneinheit ECU und die damit verbundenen Sensoren, einmal auf eine Grundeinstellung hin kalibriert, so liefert die Recheneinheit ECU im Falle der Geradeausfahrt optimale Stellwerte STHA für das Servoventil SV, wodurch sich die Auslenkung der Hinterachse HA neutral einstellt.

Diese Grundeinstellung, auch Erstkalibrierung genannt, berücksichtigt jedoch nur die Gegebenheiten des Lenksystems zum Zeitpunkt der Inbetriebnahme des Fahrzeuges. Aufgrund von Alterungserseheinungen und Verschleiß können jedoch besonders die Sensoren mit der Zeit verstellt werden. Aber auch mechanische Abnutzungserscheinungen sind von Bedeutung. Somit kann es eintreten, dass die Grundeinstellung des Lenksystems im Laufe der Betriebsdauer des Fahrzeuges nicht mehr auf eine optimale Geradeausfahrt hin eingestellt ist.

Daher schlägt die hier vorgestellte Erfindung vor, auch während des Betriebes des Fahrzeuges ständig das Lenksystem weiter zu optimieren, in dem eine Rekalibrierung der Komponenten, insbesondere der Recheneinheit ECU, erfolgt. Mit anderen Worten: Es wird das Gesamtsystem fortlaufend während der Betriebszeit des Fahrzeuges eingemessen und nachgestellt, so dass die Recheneinheit ECU jederzeit optimale Stellwerte STHA berechnet Die Rekalibrierung erfolgt dadurch, dass ein Korrekturwert berechnet wird, den die Recheneinheit ECU zu dem bei der Erstkalibrienrng ermittelten Grundeinstellwert hinzuschlägt, so dass bei der Berechnung der neuen Stellwerte STHA sowohl die Grundeinstellung als auch die jetzt durchgeführte Rekalibrierung mit berücksichtigt werden.

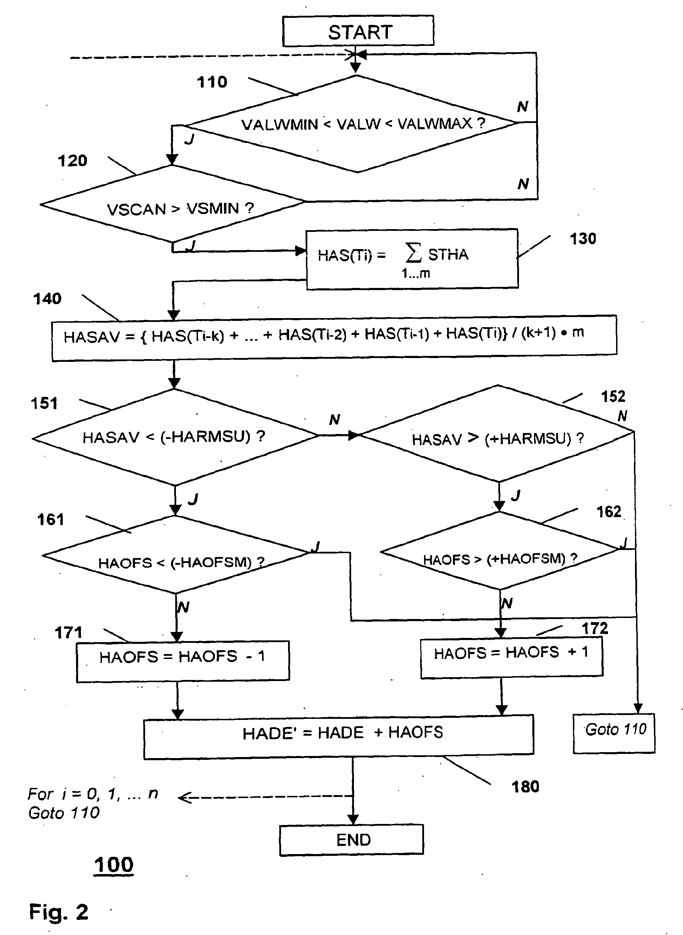

Das Verfahren zur Rekalibrierung des in der Figur 1 dargestellten Lenksystems MALS, wird anhand eines Blockschaltbildes, wie in Figur 2 dargestellt, näher beschrieben.

Die Figur 2 zeigt nun das Ablaufdiagramm für ein erfindungsgemäßes Verfahren 100, zur Steuerung der Mehrachslenkung in dem in der Figur 1 dargestellten System. Auf beide Figuren 1 und 2 wird im folgenden Bezug genommen:
Das Verfahren 100 umfaßt im wesentlichen die Schritte 110 bis 180, die im folgenden näher beschrieben werden:
   Nach dem Start des Verfahrens, wird in einem ersten Schritt 110 geprüft, ob der aktuell gemessene Lenkwinkel VALW an der Vorderachse in etwa der Neutralstellung entspricht Dazu wird ein Wertebereich defineirt, der durch einen unteren Grenzwert VALWMIN und durch einen oberen Grenzwert VALWMAX begrenzt wird. Es wird also geprüft, ob der aktuelle Lenkwinkel weder zu gering noch zu groß ist, sondem in etwa Null beträgt.

In einem zweiten Schritt 120 wird die gemessene Fahrgeschwindigkeit VSCAN mit einer vorgebbaren Mindestgeschwindigkeit VSMIN verglichen. Ist die aktuelle Fahrgeschwindigkeit VSCAN größer als diese Mindestgeschwindigkeit VSMIN, so wird im nachfolgenden Schritt 130 eine Summe berechnet, die für die spätere Rekalibrierung noch verwendet werden muss. Die im Schritt 130 berechnete Summe HAS besteht aus aufsummierten Stellwerten STHA, die die Recheneinheit ECU fortlaufend berechnet und mit einem Idealwert vergleicht. Es werden beispielsweise m=6000 Stellwerte, die vorzugsweise digitale Abtastwerte (samples) sind, zu einer Summe HAS aufsummiert. Diese Summe umfaßt somit einen Satz von m Stellwerten und beschreibt einen Beobachtungszeitraum Ti, in dem diese Abtastwerte generiert wurden. Für die weitere Berechnung in den Schritten 140 und folgende, werden mehrere solcher Summen HAS benötigt. In diesem Beispiel sind es insgesamt vier solcher Summen, d.h. auch vier entsprechende Beobachtungszeiträume, welche für die Berechnung des mittleren Stellwertes HASAV herangezogen werden.

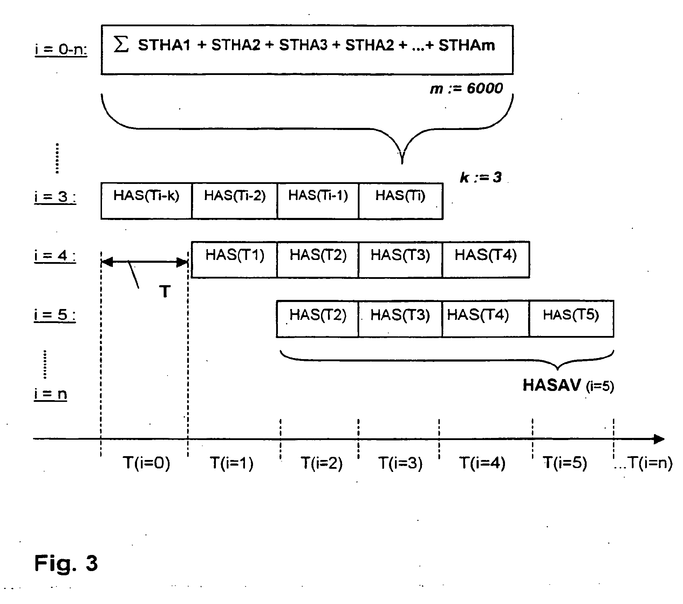

Die Mittelwertbildung, die im Schritt 140 durchgeführt wird, wird auch anhand der Figur 3 näher verdeutlicht. Dort ist über der Zeit aufgetragen, wie aus den auftretenden Stellwerten STHA fortlaufend Summen HAS in aufeinanderfolgenden Beobachtungszeitintervallen Ti gebildet werden. Jeweils vier Summen HAS werden zu einem Satz, z.B. HAS(T2) + HAS(T3) + HAS(T4) + HAS(T5) zusammen gefügt, um daraus den mittleren Stellwert HASAV zu bilden. Dabei wird in jedem Zyklus i = 0, 1, 2, 3, ..., n eine neue Summe, z.B. HAS(T5), hinzugefügt und die jeweils älteste Summe, also hier HAS(T1), aus dem Satz herausgenommen.

Wie anhand der Figur 3 näher verdeutlicht wird, enthält jedeSumme HAS eine vorgebbare Anzahl von Stellwerten STHA, hier z. B. M= 6000 Stellwerte (STHA1, STHA2, ...). In jedem weiteren Zyklus, d.h. für i=1, 2, 3 usw. wird eine solche Summe HAS gebildet. Sobald mindestens vier Summen gebildet worden sind, kann eine Mittelwertbildung statt finden. Dies wird in der Figur 3 deutlich z.B. anhand des Schrittes i=4. Dort werden die vier aufeinander folgende Summen HAS(T1) bis HAS(T4) zusammengeführt, d.h. aufsummiert. Diese Gesamtsumme umfasst also 4 mal 6000 Stellwerte. Anschließend wird diese Gesamtsumme durch die Anzahl der aufgenommenen Stellwerte dividiert. In diesem Beispiel wird durch 4 x 6000 = 24.000 dividiert. Damit erhält man einen mittleren Stellwert HASAV. Dieser gilt für den zuletzt betrachteten Zeitraum Ti, hier also für T4. Für den nächsten Zyklus i=5, bedeutet dies, dass sich der mittlere Stellwert HASAV zusammensetzt aus den Summen HAS(T2) bis HAS(T5), d.h. über alle Stellwerte erstreckt, die in den Beobachtungszeiträumen T2 bis T5 gemessen wurden. Bei jedem weiteren Zyklus wird zu dem Vierer-Satz die neueste Summe hinzugefügt und die älteste Summe aus dem Satz entfernt.

Somit erhält man einen mittleren Stellwert HASAV, der jeweils die neuesten Veränderungen der Stellwerte STHA berücksichtigt als auch zumindest einige (in diesem Beispiel 3) der letzten Beobachtungszeiträume . Diese Mittelwertbildung. könnte man daher auch als fließende oder gleitende Mittelwertbildung bezeichnen. Diese hat den Vorteil, dass der mittlere Stellwert HASAV sich nur sanft mit der sich einstellenden Entwicklung ändert, nicht aber abrupt. Das wiederum wirkt sich positiv auf das gesamte Regelsystem aus.

Im Verfahren 100, dessen Ablauf die Figur 2 zeigt, wird diese Mittelwertbildung im Schritt 140 durchgeführt. Der berechnete mittlere Stellwert HASAV müsste bei einem optimal kalibrierten System, das sich nicht verstellt, im Falle der Geradeausfahrt des Fahrzeuges sich auf einen Idealwert einstellen, der einen Lenkwinkel für die Neutralstellung der Hinterachse kennzeichnet und beispielsweise durch den Wert NULL dargestellt wird.

Jedoch ist dies oft nicht der Fall, insbesondere dann nicht, wenn sich die Sensoren oder andere Komponenten verstellt haben. In diesem Fall wird eine Rekalibrierung durchgeführt. Dazu wird aber zuerst in einem Schritt 151 geprüft, ob der berechnete mittlere Stellwert HASAV kleiner ist als ein vorgebbarer Grenzwert HARMSU. Ist dies nicht der Fall, so wird in einem zweiten Schritt 152 geprüft, ob er größer ist als ein vorgebbarer Grenzwert HARMSU. Ist auch dies nicht der Fall, so braucht keine Rekalibrierung zu erfolgen und es geht zurück zum Verfahrensschritt 110. Mit anderen Worten: Wenn der berechnete mittlere Stellwert HASAV innerhalb eines Toleranzbereiches liegt, der betragsmäßig kleiner ist als der Grenzwert HARMSU, so ist der Lenkwinkel nahezu Null und es wird keine Rekalibrierung durchgeführt. Im anderen Fall erfolgt nun folgendes:
Ist der Wert HASAV zu klein (siehe Schritt 151) so wird im späteren Schritt 171, ein Korrekturwert HAOFS zur Rekalibrierung (siehe Schritt 180) herangezogen. Entsprechendes gilt für den Fall, dass der Wert HASAV zu groß ist.

Bevor aber rekalibriert wird, wird zunächst im Schritt 161 bzw. im Schritt 162 geprüft, ob der noch gültige Korrekturwert HAOFS begrenzt werden muss. Im Schritt 161 wird geprüft, ob HAOFS kleiner ist als ein vorgebbarer Mindestwert HAOFSM. Ist dies der Fall so liegt der noch gültige Korrekturwert außerhalb eines Grenzbereiches und es wird keine Kalibrierung durchgeführt, sondem es wird mit dem Schritt 110 erneut begonnen.

Andernfalls folgt der Schritt 171 wo der Korrekturwert HAOFS um ein Inkrement verringert wird, in diesem Beispiel um den Wert Eins. In dem Schritt 162, wird entsprechend geprüft, ob der noch gültige Korrekturwert HAOFS größer ist als der Grenzwert HAOFSM, d.h. ob HAOFS außerhalb des Grenzbereiches liegt. Ist dies der Fall, so wird keine Rekalibrierung durchgeführt, sondern es wird der Schritt 110 wiederholt. Andernfalls wird jedoch der Korrekturwert HAOFS um Eins erhöht.

Ist dann der Korrekturwert neu berechnet worden, durch Dekrementierung (siehe Schritt 171) oder durch Inkrementierung (siehe Schritt 172), so wird mit diesem neuen Korrekturwert die Rekalibrierung im Schritt 180 durchgeführt. Rekalibrierung bedeutet hier, dass der bislang gültige Grundeinstellwert HADE um den Korrekturwert HAOFS verändert wird, zu einem neuen Einstellwert HADE'. Mit anderen Worten: Der Grundeinstellwert HADE, der bei der Erstkalibrierung ermittelt und eingestellt wurde, wird mit einem Offset-Wert HAOFS beaufschlagt. Die Schritte 110 und 180 werden fortlaufend durchgeführt, d.h. sie werden bei jedem neuen Zyklus i=0 bis n wiederholt. Demnach erfolgt eine fortlaufende Rekalibrierung des Systems.

Das vorgestellte Verfahren und das danach arbeitende Lenksystem stellen sich also ständig auf die neue Situation ein, so dass stets sicher gestellt ist, dass das System auf eine optimale Geradeausfahrt eingestellt ist.

Dieses Verfahren hat den Vorteil, dass auf vorhandene Signale und Parameter zurück gegriffen werden kann. Im besonderen werden die von der Regeleinrichtung ECU berechneten Stellwerte STHA herangezogen, um die Rekalibrierung durchzuführen. Wie oben bereits beschrieben erfolgt dies im wesentlichen anhand einer ständigen Beobachtung dieser berechneten Stellwerte. Gegebenenfalls wird dann durch Erzeugung eines Korrekturwertes (Offsets) in die Regelung eingegriffen, so dass optimierte Stellwerte erzeugt werden. Das Verfahren und das danach arbeitende Lenksystem ermöglichen eine kräftefreie Einstellung der Hinterachse unter Heranziehung der vorhandenen Komponenten. Das System ist demnach sehr einfach einzurichten, arbeitet aber sehr effektiv und vorteilhaft. Neben den Einsatzgebieten im Nutzkraftfahrzeugbau ist auch denkbar das Verfahren und System im PKW-Bau oder ähnlichen Anwendungen einzusetzen.

## Patentansprüche

1. Verfahren (100) für die Steuerung einer Mehrachslenkung eines Kraftfahrzeuges, insbesondere eines Nutzkraftwagens, bei dem ein erster Lenkwinkel (VALW) an der Vorderachse (VA) des Kraftfahrzeuges erfasst wird und bei dem ein zweiter Lenkwinkel (HALW) an der zu lenkenden Hinterachse (HA) erfasst wird und dieser (HALW) zumindest in Abhängigkeit von dem ersten Lenkwinkel (VALW) verändert wird, wobei zur Inbetriebnahme des Kraftfahrzeuges die Grundeinstellung der Hinterachse (HA) für die Geradeausfahrt des Kraftfahrzeuges kalibriert wird mittels eines Grundeinstellwerts (HADE), der die Neutralstellung der Hinterachse (HA) für die Geradeausfahrt definiert,
**dadurch gekennzeichnet,**
**dass** während des Betriebs des Kraftfahrzeuges diese Grundeinstellung der Hinterachse (HA) rekalibriert wird,
wobei in einem ersten Schritt (110) geprüft wird, ob der erste an der Vorderachse (VA) erfasste Lenkwinkel (VALW) innerhalb eines vorgebbaren Toleranzbereichs (VALMIN ... VALMAX) liegt, der die Neutralstellung der Vorderachse (VA) für die Geradeausfahrt umfasst,
wobei die Fahrgeschwindigkeit (VSCAN) des Kraftfahrzeuges erfasst wird und in einem zweiten Schritt (120) geprüft wird, ob die erfasste Fahrgeschwindigkeit (VSCAN) oberhalb einer vorgebbaren Mindestgeschwindigkeit (VSMIN) liegt, und wobei, sofern die beiden geprüften Bedingungen erfüllt sind, die Neutralstellung der Hinterachse (HA) für die Geradeausfahrt des Kraftfahrzeuges in nachfolgenden Schritten (130 bis 170) rekalibriert wird, indem der Grundeinstellwert (HADE), der die Neutralstellung der Hinterachse für Geradeausfahrt definiert, mit einem Korrekturwert (HAOFS) beaufschlagt wird.

2. Verfahren (100) nach Anspruch 1, **dadurch gekennzeichnet, dass** die Neutralstellung der Hinterachse (HA) während des Betriebs des Kraftfahrzeuges fortlaufend rekalibriert wird, wobei fortlaufend geprüft (Schritte 110 und 120) wird, ob der erfasste erste Lenkwinkel (VALW) an der Vorderachse (VA) in dem vorgebbaren Toleranzbereichs (VALMIN ... VALMAX) liegt und ob die erfasste Fahrgeschwindigkeit (VSCAN) des Kraftfahrzeuges oberhalb der vorgebbaren Mindestgeschwindigkeit (VSMIN) liegt.

3. Verfahren (100) nach Anspruch 1, **dadurch gekennzeichnet, dass**
mittels einer Recheneinheit (ECU) auf der Grundlage des erfassten ersten Lenkwinkels (VALW) und des erfassten zweiten Lenkwinkels (HALW) fortlaufend Stellwerte (STHA) für die Neutralstellung der Hinterachse (HA) berechnet werden, und dass diese Stellwerte (STHA) für die Berechnung eines Zeitmittelwertes herangezogen werden (Schritte 130 und 140), der einem mittleren Stellwert (HASAV) für die Neutralstellung der Hinterachse (HA) entspricht.

4. Verfahren (100) nach Anspruch 3, **dadurch gekennzeichnet, dass**
die Stellwerte (STHA) für die Berechnung des mittleren Stellwert (HASAV) nur dann herangezogen werden, wenn die geprüften Bedingungen (Schritte 110 und 120) erfüllt werden.

5. Verfahren (100) nach Anspruch 3 oder 4, **dadurch gekennzeichnet, dass**
eine vorgebbare Anzahl (m) an Stellwerten (STHA), die innerhalb eines Beobachtungszeitraumes (T) auftreten, zu einer Summe (HAS) aufsummiert werden (Schritt 130) und dass für einen Satz von zumindest zwei (k) zeitlich aufeinanderfolgenden Beobachtungszeiträumen (T1, T2, T3, T4) die entsprechenden Summen (HAS[T1], HAS[T2] ... HAS[T4]) gebildet werden und aus ihnen der mittlere Stellwert (HASAV) berechnet wird (Schritt 140).

6. Verfahren (100) nach Anspruch 3 bis 5, **dadurch gekennzeichnet, dass** die Berechnung für den mittleren Stellwert (HASAV) zyklisch fortlaufend wiederholt wird, wobei in jedem neuen Zyklus der jüngste Beobachtungszeitraum (Ti+k) zu dem Satz der Beobachtungszeiträume hinzu genommen und der älteste Beobachtungsraum (Ti) aus dem Satz heraus genommen werden (Schritt 140).

7. Verfahren (100) nach Anspruch 3 bis 5, **dadurch gekennzeichnet, dass**
geprüft wird, ob der berechnete mittlere Stellwert (HASAV) einen vorgebbaren unteren Grenzwert (-HARMSU) unterschreitet oder einen vorgebbaren oberen Grenzwert (+HARMSU) überschreitet (Schritte 151 oder 152).

8. Verfahren (100) nach Anspruch 8, **dadurch gekennzeichnet, dass**
der Korrekturwert (HAOFS) neu berechnet, insbesondere um ein Inkrement erhöht oder um ein Dekrement erniedrigt, wird (Schritte 171 oder 172), falls der berechnete mittlere Stellwert (HASAV) den unteren Grenzwert (-HARMSU) unterschreitet bzw. den oberen Grenzwert (+HARMSU) überschreitet (Schritt 151 bzw. 152).

9. Verfahren (100) nach Anspruch 8, **dadurch gekennzeichnet, dass**
geprüft wird, ob der zuletzt berechnete Korrekturwert (HAOFS) weder einen vorgebbaren unteren Grenzkorrekturwert (-HAOFSM) unterschreitet noch einen vorgebbaren oberen Grenzkorrekturwert (+HAOFSM) überschreitet (Schritte 161 oder 162).

10. Verfahren (100) nach Anspruch 9, **dadurch gekennzeichnet, dass**
der Korrekturwert (HAOFS) neu berechnet, insbesondere um ein Inkrement erhöht oder um ein Dekrement erniedrigt, wird (Schritte 161 oder 162), falls der zuletzt berechnete der Korrekturwert (HAOFS) weder den unteren Grenzkorrekturwert (-HARMSU) unterschreitet noch den oberen Grenzkorrekturwert (+HARMSU) überschreitet (Schritte 161 oder 162).

11. Lenksystem (MALS) mit einer Recheneinheit (ECU) zur elektronischen Steuerung einer Mehrachslenkung eines Kraftfahrzeuges, insbesondere eines Nutzkraftwagens, mit einem ersten Lenkwinkelsensor (WSVA), der mit der Recheneinheit (ECU) verbunden ist und der einen ersten Lenkwinkel (VALW) an der Vorderachse (VA) des Kraftfahrzeuges erfasst, mit einem zweiten Lenkwinkelsensor (WSHA), der mit der Recheneinheit (ECU) verbunden ist und der einen zweiten Lenkwinkel (HALW) an der zu lenkenden Hinterachse (HA) erfasst, bei dem die Recheneinheit (ECU) eine Änderung dieses zweiten Lenkwinkels (HALW) zumindest in Abhängigkeit von dem ersten Lenkwinkel (VALW) berechnet und bei dem zur Inbetriebnahme des Kraftfahrzeuges die Grundeinstellung der Hinterachse (HA) für die Geradeausfahrt des Kraftfahrzeuges kalibriert ist mittels eines Grundeinstellwerts (HADE), der die Neutralstellung der Hinterachse (HA) für die Geradeausfahrt definiert,
**dadurch gekennzeichnet,**
**dass** die Recheneinheit (ECU) während des Betriebs des Kraftfahrzeuges diese Grundeinstellung der Hinterachse (HA) rekalibriert,
wobei die Recheneinheit (ECU) prüft, ob der erste an der Vorderachse erfasste Lenkwinkel (VALW) innerhalb eines vorgebbaren Toleranzbereichs (VALMIN VALMAX) liegt, der die Neutralstellung der Vorderachse (VA) für die Geradeausfahrt umfasst,
wobei die Recheneinheit (ECU) anhand der von einem Geschwindigkeitssensor erfassten Fahrgeschwindigkeit (VSCAN) des Kraftfahrzeuges prüft, ob die Fahrgeschwindigkeit (VSCAN) oberhalb einer vorgebbaren Mindestgeschwindigkeit (VSMIN) liegt,
und wobei die Recheneinheit (ECU), sofern die beiden geprüften Bedingungen erfüllt sind, die Neutralstellung der Hinterachse (HA) für die Geradeausfahrt des Kraftfahrzeuges rekalibriert, indem die Recheneinheit (ECU) den Grundeinstellwert (HADE), der die Neutralstellung der Hinterachse (HA) für Geradeausfahrt definiert, mit einem Korrekturwert (HAOFS) beaufschlagt.

## Claims

1. Method (100) for controlling multi-axle steering of a motor vehicle, in particular a utility vehicle, in the case of which a first steering angle (VALW) is detected at the front axle (VA) of the motor vehicle, and in the case of which a second steering angle (HALW) is detected at the rear axle (HA) to be steered, and this second steering angle (HALW) is varied at least as a function of the first steering angle (VALW), the basic setting of the rear axle (HA) for straight-ahead driving of the motor vehicle being calibrated, for the purpose of starting up the motor vehicle, by means of a basic setting value (HADE) which defines the neutral position of the rear axle (HA) for straight-ahead driving, **characterized in that** this basic setting of the rear axle (HA) is recalibrated during operation of the motor vehicle, it being checked in a first step (110) whether the first steering angle (VALW) detected at the front axle (VA) lies within a prescribable tolerance range (VALMIN ... VALMAX) which includes the neutral position of the front axle (VA) for straight-ahead driving, the driving speed (VSCAN) of the motor vehicle being detected, and it being checked in a second step (120) whether the detected driving speed (VSCAN) lies above a prescribable minimum speed (VSMIN), and the neutral position of the rear axle (HA) for straight-ahead driving of the motor vehicle being recalibrated in subsequent steps (130 to 170) if the two checked conditions are fulfilled, this being done by applying a correction value (HAOFS) to the basic setting value (HADE), which defines the neutral position of the rear axle for straight-ahead driving.

2. Method (100) according to Claim 1, **characterized in that** the neutral position of the rear axle (HA) is continuously recalibrated during operation of the motor vehicle, it being continuously checked (steps 110 and 120) whether the detected first steering angle (VALW) at the front axle (VA) lies in the prescribable tolerance range (VALMIN ... VALMAX), and whether the detected driving speed (VSCAN) of the motor vehicle lies above the prescribable minimum speed (VSMIN).

3. Method (100) according to Claim 1, **characterized in that** manipulated variables (STHA) are continuously calculated for the neutral position of the rear axle (HA) on the basis of the detected first steering angle (VALW) and the detected second steering angle (HALW) by means of an arithmetic logic unit (ECU), and **in that** these manipulated variables (STHA) are used to calculate (steps 130 and 140) a time average value which corresponds to an average manipulated variable (HASAV) for the neutral position of the rear axle (HA).

4. Method (100) according to Claim 3, **characterized in that** the manipulated variables (STHA) are used to calculate the average manipulated variable (HASAV) only when the checked conditions (steps 110 and 120) are fulfilled.

5. Method (100) according to Claim 3 or 4, **characterized in that** a prescribable number (m) of manipulated variables (STHA) which occur within an observation period (T) are summed up (step 130) to form a sum (HAS), and **in that** the corresponding sums (HAS[T1], HAS[T2] ... HAS[T4]) are formed for a set of at least two (k) temporally consecutive observation periods (T1, T2, T3, T4), and the average manipulated variable (HASAV) is calculated (step 140) from said sums.

6. Method (100) according to Claims 3 to 5, **characterized in that** the calculation for the average manipulated variable (HASAV) is continuously repeated in a cyclic fashion, in each new cycle the most recent observation period (Ti+k) being added to the set of observation periods, and the oldest observation period (Ti) being subtracted (step 140) from the set.

7. Method (100) according to Claims 3 to 5, **characterized in that** it is checked whether the calculated average manipulated variable (HASAV) undershoots a prescribable lower limit value (-HARMSU), or overshoots a prescribable upper limit value (+HARMSU) (steps 151 or 152).

8. Method (100) according to Claim 8, **characterized in that** the correction value (HAOFS) is recalculated (steps 171 or 172), in particular raised by an increment or lowered by a decrement, if the calculated average manipulated variable (HASAV) undershoots the lower limit value (-HARMSU) or overshoots the upper limit value (+HARMSU) (step 151 and 152 respectively).

9. Method (100) according to Claim 8, **characterized in that** it is checked whether the last calculated correction value (HAOFS) neither undershoots a prescribable lower limit correction value (-HAOFSM) nor overshoots a prescribable upper limit correction value (+HAOFSM) (steps 161 or 162).

10. Method (100) according to Claim 9, **characterized in that** the correction value (HAOFS) is recalculated (steps 161 or 162), in particular raised by an increment or lowered by a decrement, if the last calculated correction value (HAOFS) neither undershoots the lower limit correction value (-HARMSU) nor overshoots the upper limit correction value (+HARMSU) (steps 161 or 162).

11. Steering system (MALS) having an arithmetic logic unit (ECU) for electronically controlling multi-axle steering of a motor vehicle, in particular a utility vehicle, having a first steering angle sensor (WSVA) which is connected to the arithmetic logic unit (ECU) and detects a first steering angle (VALW) at the front axle (VA) of the motor vehicle, and having a second steering angle sensor (WSHA) which is connected to the arithmetic logic unit (ECU) and detects a second steering angle (HALW) at the rear axle (HA) to be steered, in the case of which the arithmetic logic unit (ECU) calculates a change in this second steering angle (HALW) at least as a function of the first steering angle (VALW), and in the case of which the basic setting of the rear axle (HA) for straight-ahead driving of the motor vehicle is calibrated, for the purpose of starting up the motor vehicle, by means of a basic setting value (HADE) which defines the neutral position of the rear axle (HA) for straight-ahead driving, **characterized in that** the arithmetic logic unit (ECU) recalibrates this basic setting of the rear axle (HA) during operation of the motor vehicle, the arithmetic logic unit (ECU) checking whether the first steering angle (VALW) detected at the front axle lies within a prescribable tolerance range (VALMIN ... VALMAX) which includes the neutral position of the front axle (VA) for straight-ahead driving, the arithmetic logic unit (ECU) using the driving speed (VSCAN), detected by a speed sensor, of the motor vehicle to check whether the driving speed (VSCAN) lies above a prescribable minimum speed (VSMIN) and, if the two checked conditions are fulfilled, the arithmetic logic unit (ECU) recalibrating the neutral position of the rear axle (HA) for straight-ahead driving of the motor vehicle by virtue of the fact that the arithmetic logic unit (ECU) applies a correction value (HAOFS) to the basic setting value (HADE) which defines the neutral position of the rear axle (HA) for straight-ahead driving.

## Revendications

1. Procédé (100) de commande d'une direction à plusieurs essieux d'un véhicule automobile, notamment d'un véhicule utilitaire, avec lequel un premier angle de direction (VALW) est détecté au niveau de l'essieu avant (VA) du véhicule automobile et avec lequel un deuxième angle de direction (HALW) est détecté au niveau de l'essieu arrière (HA) à orienter et celui-ci (HALW) est modifié au moins en fonction du premier angle de direction (VALW), le réglage de base de l'essieu arrière (HA) pour le déplacement du véhicule automobile en ligne droite étant calibré pour la mise en service du véhicule automobile au moyen d'une valeur de réglage de base (HADE) qui définit la position neutre de l'essieu arrière (HA) pour le déplacement en ligne droite, **caractérisé en ce que** ce réglage de base de l'essieu arrière (HA) est recalibré pendant l'utilisation du véhicule automobile, une première étape (110) consistant à vérifier si le premier angle de direction (VALW) détecté au niveau de l'essieu avant (VA) se trouve à l'intérieur d'une plage de tolérance (VALMIN ... VALMAX) pouvant être prédéfinie et qui englobe la position neutre de l'essieu avant (VA) pour le déplacement en ligne droite, la vitesse de déplacement (VSCAN) du véhicule automobile étant détectée et une deuxième étape (120) consistant à vérifier si la vitesse de déplacement (VSCAN) détectée est supérieure à une vitesse minimale (VSMIN) pouvant être prédéfinie et, sous réserve que les deux conditions contrôlées soient satisfaites, la position neutre de l'essieu arrière (HA) pour le déplacement du véhicule automobile en ligne droite est recalibrée au cours des étapes suivantes (130 à 170) en appliquant à la valeur de réglage de base (HADE), qui définit la position neutre de l'essieu arrière pour un déplacement en ligne droite, une valeur de correction (HAOFS).

2. Procédé (100) selon la revendication 1, **caractérisé en ce que** la position neutre de l'essieu arrière (HA) est recalibrée continuellement pendant l'utilisation du véhicule automobile, un contrôle continu ayant lieu (étapes 110 et 120) pour vérifier si le premier angle de direction détecté (VALW) au niveau de l'essieu avant (VA) se trouve dans la plage de tolérance (VALMIN ... VALMAX) pouvant être prédéfinie et si la vitesse de déplacement (VSCAN) détectée du véhicule automobile est supérieure à la vitesse minimale (VSMIN) pouvant être prédéfinie.

3. Procédé (100) selon la revendication 1, **caractérisé en ce que** des valeurs de réglage (STHA) pour la position neutre de l'essieu arrière (HA) sont calculées continuellement au moyen d'une unité de calcul (ECU) en se basant sur le premier angle de direction (VALW) détecté et sur le deuxième angle de direction (HALW) détecté et que ces valeurs de réglage (STHA) sont utilisées pour le calcul d'une valeur moyenne du temps (étapes 130 et 140) qui correspond à une valeur de réglage moyenne (HASAV) pour la position neutre de l'essieu arrière (HA).

4. Procédé (100) selon la revendication 3, **caractérisé en ce que** les valeurs de réglage (STHA) ne sont utilisées pour le calcul de la valeur de réglage moyenne (HASAV) que si les conditions contrôlées (étapes 110 et 120) sont satisfaites.

5. Procédé (100) selon la revendication 3 ou 4, **caractérisé en ce qu'**un nombre (m) pouvant être prédéfini de valeurs de réglage (STHA) qui se produisent pendant une période d'observation (T) sont additionnées en un total (HAS) (étape 130) et que pour un ensemble d'au moins deux (k) périodes d'observation (T1, T2, T3, T4) chronologiques, les totaux correspondants (HAS[T1], HAS[T2], ..., HAS[T4]) sont calculés et la valeur de réglage moyenne (HASAV) est calculée à partir de ceux-ci (étape 140).

6. Procédé (100) selon les revendications 3 à 5, **caractérisé en ce que** le calcul de la valeur de réglage moyenne (HASAV) est répété continuellement de manière cyclique, la période d'observation la plus récente (Ti+k) étant ajoutée à l'ensemble des périodes d'observation au cours de chaque nouveau cycle et la période d'observation la plus ancienne (Ti) étant supprimée de l'ensemble (étape 140).

7. Procédé (100) selon les revendications 3 à 5, **caractérisé en ce qu'**un contrôle à lieu pour vérifier si la valeur de réglage moyenne (HASAV) calculée est inférieure à une valeur limite inférieure (-HARMSU) pouvant être prédéfinie ou supérieure à une valeur limite supérieure (+HARMSU) pouvant être prédéfinie (étapes 151 ou 152).

8. Procédé (100) selon la revendication 8, **caractérisé en ce que** la valeur de correction (HAOFS) est recalculée, notamment augmentée d'un incrément ou diminuée d'un décrément (étapes 171 ou 172) si la valeur de réglage moyenne (HASAV) calculée est inférieure à la valeur limite inférieure (-HARMSU) ou supérieure à la valeur limite supérieure (+HARMSU) (étapes 151 ou 152).

9. Procédé (100) selon la revendication 8, **caractérisé en ce qu'**un contrôle a lieu pour vérifier si la dernière valeur de correction calculée (HAOFS) n'est ni inférieure à une valeur limite de correction inférieure (-HAOFSM) pouvant être prédéfinie, ni supérieure à une valeur limite de correction supérieure (+HAOFSM) pouvant être prédéfinie (étapes 161 ou 162).

10. Procédé (100) selon la revendication 9, **caractérisé en ce que** la valeur de correction (HAOFS) est recalculée, notamment augmentée d'un incrément ou diminuée d'un décrément (étapes 161 ou 162) si la dernière valeur de correction calculée (HAOFS) n'est ni inférieure à la valeur limite de correction inférieure (-HARMSU), ni supérieure à la valeur limite de correction supérieure (+HARMSU) (étapes 161 ou 162).

11. Système de direction (MALS) comprenant une unité de calcul (ECU) pour la commande électronique d'une direction à plusieurs essieux d'un véhicule automobile, notamment d'un véhicule utilitaire, comprenant un premier capteur d'angle de direction (WSVA) qui est relié avec l'unité de calcul (ECU) et qui détecte un premier angle de direction (VALW) au niveau de l'essieu avant (VA) du véhicule automobile, comprenant un deuxième capteur d'angle de direction (WSHA) qui est relié avec l'unité de calcul (ECU) et qui détecte un deuxième angle de direction (HALW) au niveau de l'essieu arrière (HA) à orienter, l'unité de calcul (ECU) calculant une modification de ce deuxième angle de direction (HALW) au moins en fonction du premier angle de direction (VALW), le réglage de base de l'essieu arrière (HA) pour le déplacement du véhicule automobile en ligne droite étant calibré pour la mise en service du véhicule automobile au moyen d'une valeur de réglage de base (HADE) qui définit la position neutre de l'essieu arrière (HA) pour le déplacement en ligne droite, **caractérisé en ce que** l'unité de calcul (ECU) recalibre ce réglage de base de l'essieu arrière (HA) pendant l'utilisation du véhicule automobile, l'unité de calcul (ECU) vérifiant si le premier angle de direction (VALW) détecté au niveau de l'essieu avant se trouve à l'intérieur d'une plage de tolérance (VALMIN ... VALMAX) pouvant être prédéfinie et qui englobe la position neutre de l'essieu avant (VA) pour le déplacement en ligne droite, l'unité de calcul (ECU) vérifiant, à l'aide de la vitesse de déplacement (VSCAN) du véhicule automobile détectée au moyen d'un capteur de vitesse, si la vitesse de déplacement (VSCAN) est supérieure à une vitesse minimale (VSMIN) pouvant être prédéfinie et l'unité de calcul (ECU), sous réserve que les deux conditions contrôlées soient satisfaites, recalibre la position neutre de l'essieu arrière (HA) pour le déplacement du véhicule automobile en ligne droite en faisant appliquer par l'unité de calcul (ECU) à la valeur de réglage de base (HADE), laquelle définit la position neutre de l'essieu arrière (HA) pour un déplacement en ligne droite, une valeur de correction (HAOFS).
